# FASCICULE DE BREVET EUROPEEN

(11) **EP 0 407 268 B1**
(45) Date de publication et mention de la délivrance du brevet: **17.08.1994**
(21) Numéro de dépôt: 90401855.3
(22) Date de dépôt: 28.06.1990
(51) Int. Cl.: G06F 1/08

(54) **Circuit intégré à microprocesseur et horloge interne programmable**
Integrierte Schaltung mit Mikroprozessor und programmierbarer innerer Uhr
Integrated circuit with microprocessor and programmable internal clock

(30) Priorité: 07.07.1989 FR 8909196
(43) Date de publication de la demande: 09.01.1991
(73) Titulaire: SGS-THOMSON MICROELECTRONICS S.A., 94250 Gentilly (FR)
(72) Inventeur: Nicolai, Jean, F-75116 Paris (FR)
(74) Mandataire: Schmit, Christian Norbert Marie

(56) Documents cités:
- EP-A- 0 186 864
- EP-A- 0 194 205
- EP-A- 0 296 668
- US-A- 4 691 124

## Description

L'invention concerne la fabrication des circuits intégrés, et plus précisément celle des circuits intégrés comportant un processeur de traitement de signaux, c'est-à-dire un circuit capable d'exécuter des opérations de traitement de données sous la commande d'instructions.

Dans beaucoup de circuits intégrés, il est nécessaire de disposer d'une horloge. Un processeur de traitement de signaux nécessite de toutes façons une horloge assurant le séquencement régulier des opérations de traitement effectuées.

L'horloge peut être réalisée à partir d'un oscillateur interne au circuit intégré, ou bien les signaux d'horloge peuvent être appliqués à partir de l'extérieur du circuit intégré, sur une borne spécialement réservée à cet effet.

Si on utilise une horloge externe, cela impose à l'utilisateur du circuit-intégré de prévoir cette horloge, ce qui augmente indirectement le coût du circuit pour l'utilisateur. De plus, cela impose une borne de circuit réservée à l'horloge.

Lorsqu'on réalise sur un circuit-intégré un oscillateur, la difficulté est d'obtenir précisément une fréquence qu'on souhaite. En effet, les dispersions de fabrication résultant des procédés technologiques employés sont telles qu'on ne sait pas obtenir une fréquence avec une précision suffisante. La dispersion de fréquence libre d'oscillation obtenue pour deux oscillateurs identiques ayant suivi la même filière de fabrication est facilement de 100% ou même plus. Cela résulte de ce que les procédés de fabrication impliquent des étapes de dopage, de diffusion d'impuretés à haute température, de dépôts de couches isolantes minces, etc.; la reproductibilité de ces étapes d'un circuit au suivant n'est pas très facile à maîtriser.

Ou bien la fréquence d'oscillation n'est pas critique, et alors on peut se permettre d'avoir un oscillateur entièrement intégré dans le circuit, sans borne extérieure de réception d'un signal d'horloge. Ou bien au contraire la fréquence est un paramètre critique et la solution universellement utilisée est de connecter à l'extérieur du circuit intégré des éléments de réglage (résistances ou capacités en général) de l'oscillateur présent sur le circuit. Ces éléments de réglage ont une valeur connue très précisément car ils ne sont pas soumis aux mêmes dispersions de fabrication ou bien ils ont été triés. Mais l'inconvénient est qu'ils doivent être connectés directement à l'oscillateur du circuit intégré, et par conséquent ils imposent que le circuit intégré comporte des broches extérieures supplémentaires spécialement réservées à cet usage. Les broches extérieures supplémentaires devraient cependant être évitées au maximum car elles sont l'un des facteurs de coût les plus importants pour les circuits intégrés.

US-A-4 691 124 décrit un cricuit intégré contenant un registre et une horloge qui fait fonctionner le circuit toujours à la fréquence maximale réelle.
Pour cela, un circuit générateur d'horloge est placé sur le même substrat et au plus près d'un circuit électronique, le générateur d'horloge délivrant un signal d'horloge qui dépend du signal de retard le plus lent du circuit électronique. EP-A-1 86 864 décrit également un multiplieur piloté par une horloge interne de structure technologique similaire au multiplieur afin d'en optimiser le temps de travail.

Dans un processeur de signaux, c'est-à-dire un circuit électronique capable d'exécuter des tâches variées de traitement de signaux sous le contrôle d'instructions, l'horloge qui détermine le séquencement des opérations exécutées par le microprocesseur est un élément de circuit très important et sa fréquence doit être bien déterminée. Dans les circuits de traitement de signaux fabriqués actuellement, l'horloge est externe ou bien elle est interne et ajustée par des composants précis extérieurs (quartz, résistances, capacités).

Un but de l'invention est de proposer un circuit intégré comportant une horloge interne, qui ne soit pas soumis aux inconvénients qu'on vient de décrire, et notamment aux inconvénients résultant de la dispersion technologique existant entre circuits théoriquement identiques.

Un autre but de l'invention est de permettre la réalisation d'un circuit intégré comportant une horloge dont la fréquence puisse être définie facilement et précisément, sans imposer la présence de broches spécifiques de connexion pour connecter des éléments de réglage extérieurs à un oscillateur interne.

Enfin, un but de l'invention est tout spécialement la réalisation d'un processeur de traitement de signaux ayant une horloge pour assurer le séquencement de ses propres opérations, cette horloge ayant une fréquence pouvant être définie facilement par le processeur lui-même.

Pour atteindre ces divers buts, la présente invention propose un circuit-intégré selon la revendication 1.

Ainsi, on peut utiliser un oscillateur entièrement interne, et les données de réglage de fréquence de l'oscillateur seront établies soit de façon purement interne par le processeur, par exemple à partir du contenu de mémoires mortes ou non volatiles réalisées sur le même substrat que le processeur et l'oscillateur, soit de manière externe, à partir de données fournies au processeur par l'extérieur; mais dans ce dernier cas, contrairement à ce que l'on faisait dans la technique antérieure, ces données de réglage de fréquence ne nécessiteront aucune borne de connexion spécifique puisqu'elles passeront par les bornes d'entrée/sortie de données du circuit, bornes qui sont déjà obligatoirement prévues pour permettre le dialogue du processeur avec l'extérieur.

L'invention permet ainsi d'ajuster la fréquence d'un oscillateur purement interne pour compenser les erreurs de fréquence dues à la dispersion technologique.

Elle permet aussi de régler la fréquence de l'oscillateur en fonction des desiderata de l'utilisateur (en fonction de l'application dans laquelle se trouve son circuit).

Elle permet enfin de régler la fréquence en fonction de l'environnement, par exemple en fonction de la tension d'alimentation du circuit, et on peut très bien envisager que le processeur détecte lui-même les contraintes d'environnement imposant que la fréquence de l'oscillateur soit changée : il peut être souhaitable par exemple que la fréquence soit réduite lorsque la tension d'alimentation baisse excessivement.

L'invention est particulièrement intéressante lorsque l'oscillateur concerné est justement celui qui sert à établir des signaux d'horloge pour le fonctionnement du processeur de signaux lui-même.

L'oscillateur est de préférence un oscillateur à relaxation comportant une capacité et des sources de courant de charge et décharge de la capacité, et le registre contrôle la valeur des courants de charge et décharge de la capacité. Ce contrôle s'effectue de préférence par une commutation de sources de courant. Ces sources peuvent avoir des valeurs pondérées d'une manière binaire, le registre contenant des bits pondérés de la même manière.

Mais le registre pourrait aussi contrôler la valeur de la capacité de l'oscillateur à relaxation, et le contrôle s'efectuerait alors par commutation de capacités élémentaires en parallèle. Ces capacités peuvent aussi avoir des valeurs pondérées pour faciliter le réglage de fréquence.

Le registre peut être chargé dans certaines applications par le processeur à partir d'une mémoire non volatile électriquement programmable, réalisée sur le même substrat que l'oscillateur et le processeur, et contenant des données de correction de fréquence. Cette mémoire non volatile peut contenir des données de correction individuelles du circuit intégré, ces données étant obtenues par test du circuit intégré après fabrication de manière à prendre en compte les fluctuations de paramètres de fabrication technologiques. Cette solution est particulièrement intéressante puisqu'on stocke sur le circuit intégré lui-même des données individuelles de correction de fréquence qui ne concernent que ce circuit.

Mais la mémoire peut aussi contenir d'autres données de modification de fréquence, non liées au procédé de fabrication du circuit.

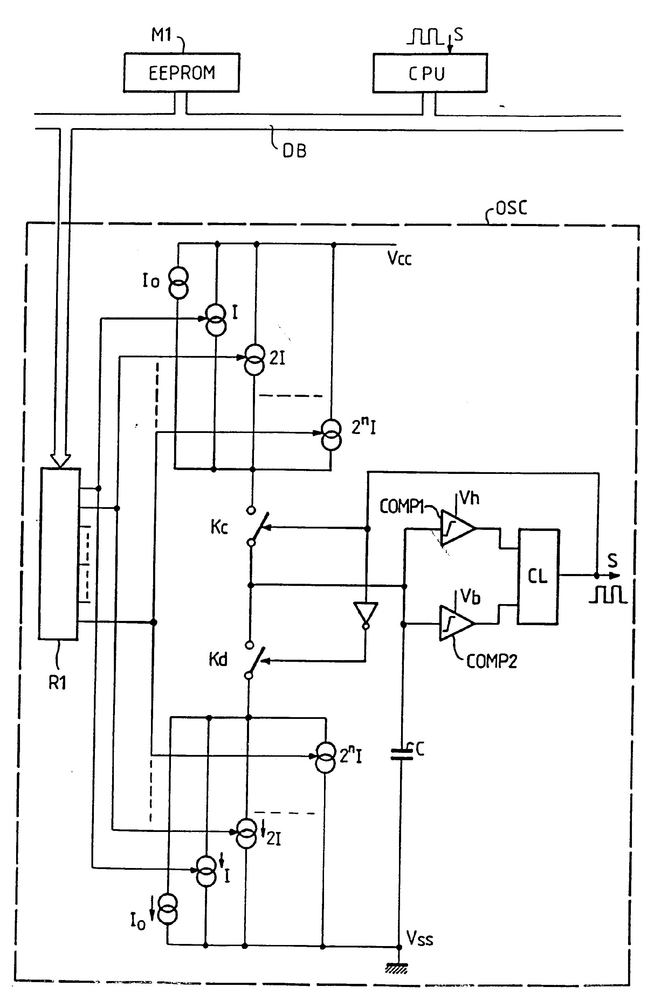

D'autres caractéristiques et avantages de l'invention apparaîtront à la lecture de la description détaillée qui suit et qui est faite en référence aux dessins annexés dans lesquels la figure unique représente un schéma d'un mode de réalisation d'un circuit intégré selon l'invention.

L'invention sera décrite plus particulièrement à propos de la réalisation d'un circuit intégré comportant un microprocesseur et utilisant un oscillateur OSC pour définir une fréquence d'horloge servant au séquencement des tâches exécutées par le microprocesseur.

L'oscillateur est entièrement intégré dans le même substrat semiconducteur que le microprocesseur. C'est un oscillateur à fréquence variable; la fréquence est ajustable sous la commande d'un registre R1 dont le contenu peut être chargé par le microprocesseur.

Le microprocesseur n'a été représenté que très partiellement sur la figure. Il comprend classiquement une unité centrale de traitement CPU raccordée à un bus de données (ou d'adresses et données) DB permettant l'échange de données notamment avec des mémoires (vives, mortes ou non volatiles), des ports d'entrée/sortie du circuit intégré, et des registres internes du circuit intégré.

Parmi les mémoires raccordées au bus DB, on a prévu une mémoire électriquement programmable M1, de préférence une mémoire électriquement programmable et électriquement effaçable (EEPROM). Cette mémoire peut cependant ne pas être effaçable électriquement.

La mémoire M1 peut avoir diverses utilisations dans le circuit, c'est-à-dire qu'elle n'est pas spécialement réservée au réglage de fréquence selon l'invention. Dans ce cas, on réservera une zone spécifique de la mémoire pour contenir selon l'invention des données relatives à la fréquence que doit avoir l'oscillateur.

Parmi les registres raccordés au bus DB, on a prévu un registre spécifique R1 destiné à contenir, en fonctionnement, des données liées aux données contenues dans la mémoire M1. C'est le registre R1 qui commande le réglage automatique de la fréquence de l'oscillateur. On décrira plus loin la manière dont se fait ce réglage.

En fin de fabrication du circuit intégré, il est habituel de procéder à des tests; en particulier des tests finaux sont faits après encapsulation du circuit dans un boîtier, alors que seules les broches d'accès extérieur du circuit intégré restent accessibles. Parmi ces tests, on procède à une mesure de la fréquence libre de l'oscillateur OSC; on en déduit l'écart qui existe entre la fréquence de l'oscillateur et la fréquence qu'on souhaiterait, cet écart étant dû aux fluctuations incontrôlables des paramètres des diverses étapes technologiques de fabrication (durées, températures, dosages, etc.).

On commande alors le stockage dans la mémoire M1 d'une information correspondant à cet écart. Le microprocesseur peut effectuer lui-même ce stockage.

Lors de l'utilisation du circuit, cette information est utilisée pour corriger systématiquement la fréquence de l'oscillateur afin qu'elle prenne bien la valeur désirée.

Par exemple, on peut prévoir que la mise sous tension du circuit intégré provoque une étape systématique de transfert dans le registre R1 de l'information de correction contenue dans la mémoire M1. Comme ce transfert s'effectue par l'intermédiaire du microprocesseur qui est apte à faire des calculs, on peut d'ailleurs très bien prévoir que l'on place dans le registre R1 non pas exactement le contenu stocké dans la mémoire M1 mais des données calculées par le microprocesseur à partir du contenu de la mémoire M1.

Tant que le microprocesseur reste alimenté en énergie, le registre R1 conserve ces données et corrige en permanence la fréquence de l'oscillateur OSC.

Dans le cas où l'oscillateur est celui qui permet d'établir les signaux d'horloge du microprocesseur, il est préférable que l'oscillateur fonctionne au départ avec une fréquence relativement basse. Pour cela, au départ, lors de la mise sous tension, on prévoira que le registre R1 est systématiquement remis à zéro (c'est ce qu'on fait en général par des circuits de réinitialisation dans tous les microprocesseurs); et on prévoira que le contenu zéro du registre correspond à une fréquence relativement basse. Le programme de démarrage du processeur effectuera ensuite le chargement du registre pour obtenir la fréquence de fonctionnement désirée.

Avec un octet de correction, on peut corriger la fréquence par exemple par pas de 2% dans une plage de fluctuations technologiques d'environ 200% .

On peut aussi prévoir que l'ajustement de fréquence n'est pas systématique ou bien qu'il n'est pas lié (ou pas exclusivement lié) aux paramètres technologiques de fabrication du circuit intégré. En effet, l'invention permet d'avoir une fréquence d'oscillateur variable en fonction de n'importe quel critère. Il suffit que le microprocesseur reçoive une instruction de modification de fréquence; il place alors dans le registre R1 la valeur de correction de fréquence qui lui est indiquée. La correction de fréquence se fait sans utiliser de composants extérieurs, et en tout cas elle se fait en n'utilisant que les bornes d'entrée/sortie de données nécessairement présentes dans le circuit intégré.

Dans un exemple d'application, on pourrait envisager que la fréquence soit corrigée en fonction de la température, ou encore en fonction de la valeur de la tension d'alimentation du circuit-intégré. Mais une correction en fonction des desiderata de l'utilisateur, quels qu'ils soient, est également possible.

L'oscillateur OSC représenté à la figure est un oscillateur à relaxation utilisant une capacité C susceptible d'être chargée par un courant de charge réglable i et déchargée par un courant de décharge qui est de préférence égal au courant de charge et de signe contraire.

L'ensemble de l'oscillateur est alimenté entre deux bornes d'alimentation dont l'une est à un potentiel bas Vss et l'autre à un potentiel haut Vcc.

Le courant de charge est produit par un ensemble de plusieurs sources de courant reliées entre Vcc et la capacité (cette dernière ayant par ailleurs une borne à Vss); ces sources de courant peuvent être mises en parallèle sous le contrôle du registre R1, en fonction des données contenues dans celui-ci, pour obtenir un courant de charge de valeur variable.

De même le courant de décharge est produit par un ensemble de sources de courant reliées aux bornes de la capacité. Ces sources peuvent aussi être mises parallèle sous le contrôle du registre R1, en fonction des données contenues dans celui-ci pour établir un courant de décharge de valeur variable.

La solution la plus simple est d'utiliser une pondération binaire, dans laquelle les bits stockés dans le registre R1 sont placés dans un ordre de pondération croissante, et chaque bit commande une source de courant de valeur pondérée correspondante. Ainsi, le premier bit du registre (bit de poids le plus faible) peut commander une source de courant de charge de valeur I et simultanément une source de courant de décharge de même valeur I; le deuxième bit du registre commande une source de courant de charge de valeur 2I et une source de courant de décharge de valeur 2I; et ainsi de suite, le n^{ième} bit commande une source de courant de charge et une source de courant de décharge de valeur 2ⁿI.

Selon le contenu du registre on obtient ainsi un courant de charge et décharge i variable entre 0 et (2ⁿ⁺¹-1)I, par pas égaux à I. Ce courant peut être le courant principal de charge et décharge ou être placé en parallèle avec un courant de charge ou décharge I0 de base, auquel cas le registre sert à corriger la valeur de ce courant I0 (le courant de charge étant I0 pour un contenu zéro du registre).

Le courant de charge i constitué par la somme du courant I0 et des courants individuellement mis en service par le registre est transmis à la capacité C par l'intermédiaire d'un interrupteur Kc fermé seulement pendant la charge de la capacité.

Réciproquement, le courant de décharge i est transmis par l'intermédiaire d'un interrupteur Kd fermé seulement pendant la décharge.

Les interrupteurs Kc et Kd sont commutés en opposition de phase par des comparateurs à seuil COMP1 et COMP2 reliés à la capacité. Le comparateur à seuil COMP1 a pour fonction d'interrompre la charge de la capacité et de démarrer sa décharge lorsque la tension à ses bornes atteint un seuil haut Vh. Le comparateur COMP2 a pour fonction d'interrompre la décharge de la capacité et de recommencer la charge lorsque la tension aux bornes de la capacité atteint un seuil bas Vb. Un circuit logique CL (bascule de type RS) recevant les sorties des comparateurs fournit les signaux de commande des interrupteurs Kc et Kd. La sortie S de ce circuit logique CL est la sortie de l'oscillateur OSC; elle fournit des créneaux à une fréquence qui est liée à la valeur (réglable par le registre R1) du courant de charge et décharge, à la valeur de la capacité C, et enfin à la valeur de l'écart entre les seuils haut et bas Vh et Vb des comparateurs COMP1 et COMP2.

Si la technologie est telle que les courant I et I0 dépendent de la valeur de la tension d'alimentation Vcc, on peut prévoir que les comparateurs COMP1 et COMP2 sont construits à partir de sources de courant réalisées de la même manière que les sources de courant de charge et de décharge I0, I, 2I, etc.; plus exactement on prévoit que les comparateurs COMP1 et COMP2 sont construits de manière que la différence de seuils Vh-Vb reste proportionnelle au courant I d'une source de courant élémentaire lorsque la tension d'alimentation varie; de cette manière, la durée de charge et de décharge devient indépendante de la tension Vcc : si la charge est plus lente parce que le courant est plus faible, l'écart de tension Vh-Vb qui définit avec le courant la durée de la charge sera proportionnellement plus faible, et au total la période de l'oscillateur ne changera pas.

Si le registre R1 sert essentiellement à recevoir une correction de fréquence liée aux fluctuations technologiques, c'est par ce registre qu'on prendra en compte la valeur de la capacité C (sujette aux fluctuations technologiques).

## Revendications

1. Circuit intégré comprenant un processeur (CPU), un registre et un oscillateur (OSC) intégré dans le même substrat que le processeur, l'oscillateur servant d'horloge pour le processeur, caractérisé en ce que ledit registre est un registre de données (R1) apte à être chargé par le processeur à partir d'une mémoire électriquement programmable (M1) réalisée sur le même substrat de circuit intégré et contenant des données de correction de fréquence, pour controler ledit oscillateur.

2. Circuit intégré selon la revendication 1, caractérisé en ce que l'oscillateur est un oscillateur à relaxation, comportant une capacité (C) et des sources de courant de charge et décharge de la capacité, et en ce que le registre (R1) contrôle la valeur des courants de charge et décharge de la capacité.

3. Circuit intégré selon la revendication 1, caractérisé en ce que la mémoire non volatile contient des données de correction individuelles du circuit intégré, ces données étant obtenues par test du circuit intégré après fabrication de manière à prendre en compte les fluctuations de paramètres de fabrication du circuit.

## Patentansprüche

1. Integrierte Schaltung mit einem Prozessor (CPU), einem Register und einem Oszillator (OSC), der in das gleiche Substrat wie der Prozessor integriert ist, wobei der Oszillator als Taktgeber für den Prozessor dient, dadurch gekennzeichnet, daß das Register ein Datenregister (R1) ist, das von dem Prozessor ausgehend von einem elektrisch programmierbaren Speicher (M1) geladen werden kann, der auf dem gleichen integrierten Schaltungssubstrat realisiert ist und Frequenzkorrekturdaten zur Kontrolle des Oszillators enthält.

2. Integrierte Schaltung nach Anspruch 1, dadurch gekennzeichnet, daß der Oszillator ein Kippgenerator ist, der eine Kapazität (C) und Lade- und Entladestromquellen für die Kapazität aufweist, und daß das Register (R1) den Wert der Lade- und Entladeströme der Kapazität kontrolliert.

3. Integrierte Schaltung nach Anspruch 1, dadurch gekennzeichnet, daß der nicht flüchtige Speicher individuelle Korrekturdaten für die integrierte Schaltung enthält, wobei diese Daten durch einen Test der integrierten Schaltung nach der Herstellung erhalten wurden, um die Schwankungen von Fertigungsparametern der Schaltung zu berücksichtigen.

## Claims

1. Integrated circuit comprising a processor (CPU), a register and an oscillator (OSC) integrated in the same substrate as the processor, the oscillator serving as a clock for the processor, characterised in that the said register is a data register (R1) able to be loaded by the processor from an electrically programmable memory (M1) produced on the same integrated circuit substrate and containing frequency correction data, for controlling the said oscillator.

2. Integrated circuit according to Claim 1, characterised in that the oscillator is a relaxation oscillator having a capacitance (C) and sources of current for charging and discharging the capacitance, and in that the register (R1) controls the value of the capacitance charge and discharge currents.

3. Integrated circuit according to Claim 1, characterised in that the non-volatile memory contains individual correction data for the integrated circuit, these data being obtained by testing the integrated circuit after manufacture so as to take account of any fluctuations in the circuit manufacturing parameters.
